# EUROPÄISCHE PATENTANMELDUNG

(11) **EP 4 338 976 A1**
(43) Veröffentlichungstag der Anmeldung: **20.03.2024**
(21) Anmeldenummer: 23197209.2
(22) Anmeldetag: 13.09.2023
(51) Int. Cl.: B60B 15/04, B60B 15/10

(54) **RAD MIT VARIABLEN SPIKES**

(30) Priorität: 13.09.2022 DE 102022123378
(71) Anmelder: Gartentechnik Münsterland GmbH, 48268 Greven (DE)
(72) Erfinder: Kappelhoff, Hendrik, 48268 Greven (DE)
(74) Vertreter: Euscher, Christoph

(57) **Zusammenfassung**

Die Erfindung betrifft ein Rad (1) mit radial angeordneten, radial ausfahrbaren Spikes (2), wobei eine Ausfahrstrecke (12) eines Spikes (2) einstellbar während einer Rotation des Rades (1) veränderlich ist.

Erfindungsgemäß ist dabei vorgesehen, dass der Spike (2) von einer Federkraft einer mechanischen Feder (3) nach außen gedrückt wird, so dass ein aus einer Lauffläche des Rades (1) ausgefahrener Spike (2) bei Überschreiten einer auf ihn radial nach innen wirkenden Gegenkraft in das Rad (1) zurückfedert.

Die Erfindung betrifft weiterhin eine Anordnung aus einem derartigen Rad (1) und einer außerhalb des Rades (1) anzuordnenden Stelleinrichtung (13), sowie ein Roboterfahrzeug und einen Mähroboter mit einer derartigen Anordnung (1).

## Beschreibung

Die Erfindung betrifft ein Rad, insbesondere ein Antriebsrad eines Fahrzeugs, mit radial angeordneten, radial ausfahrbaren Spikes, wobei eine Ausfahrstrecke eines Spikes variabel einstellbar ist. Die Erfindung betrifft zudem eine Anordnung aus einem derartigen Rad und einer außerhalb des Rades anzuordnenden Stelleinrichtung, sowie ein Roboterfahrzeug und einen Mähroboter mit einer derartigen Anordnung.

### Stand der Technik

Zur Verbesserung der Reibungskräfte von Rädern auf glatten, insbesondere vereisten Straßen können in Winterreifen Stahl- oder Hartmetallstifte eingearbeitet sein, die grob 1 bis 2 mm aus der Lauffläche eines Rades herausragen. Ein Nachteil dieser als Spikes bezeichneten Stifte ist ein deutlich stärkerer, zu Spurrillen führender Verschleiß der Straße sowie eine verminderte Reibung des Rades auf trockenen Fahrbahnen.

Zur Vermeidung dieser Nachteile sind aus dem Stand der Technik verschiedene Lösungen bekannt, die ein Ein- und Ausfahren von Spikes, vorzugsweise auch ferngesteuert vom Fahrersitz aus, ermöglichen.

So beschreibt die CH417370A einen Reifen, bei welchem Spikes in zylindrischen Löchern angeordnet sind, welche durch pneumatische oder hydraulische Betätigung durch die Löcher in der Lauffläche des Reifens gedrückt werden, und welche bei einem Entfallen des Drucks durch zuvor komprimierte Rückstellfedern in eine eingefahrene Position zurückgedrückt werden.

Die DE19717676C2 beschreibt einen Reifen, insbesondere für PKW und LKW, bei dem in der Lauffläche des Reifens Spikes angeordnet sind, die mit einer pneumatischen Vorrichtung aus der Lauffläche heraus bewegt werden, wobei die Position der Spikes durch wenigstens zwei voneinander getrennte pneumatische Zuführungen eingestellt wird.

Weiterhin beschreibt die US2941566A eine Traktionsvorrichtung für Fahrzeuge, bei welcher Fahrbahneingriffselemente von einem Kolben durch die Lauffläche getrieben werden. Dabei dehnt der Kolben eine innerhalb eines Fluidzylinders angeordnete Rückstellfeder, welche den Kolben nach Abfall des Druckes wieder einzieht.

Diese Lösungen zielen in der Regel auf eine Anwendung im Straßenverkehr ab. In der Land- und Forstwirtschaft, im Gartenbau oder der Landschaftspflege hingegen differieren die Rahmenbedingungen für eine gute Lösung je nach vorliegendem Untergrund und eingesetztem Rädermaterial deutlich.

### Offenbarung der Erfindung

Aufgabe der vorliegenden Erfindung ist es, eine Lösung zur Verbesserung der Haftung von Rädern auf vorzugsweise unbefestigten Untergrund zu bieten.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Erfindungsgemäß vorgesehen ist ein Rad, insbesondere ein Fahrzeugrad, mit radial angeordneten, radial ausfahrbaren Spikes, bei dem eine Ausfahrstrecke eines Spikes einstellbar und abhängig vom Drehwinkel, oder anders formuliert, während einer Rotation des Rades veränderlich ist, und wobei der Spike von einer Federkraft einer mechanischen Feder vorzugsweise radial nach außen gedrückt wird, so dass ein aus einer Lauffläche des Rades ausgefahrener Spike bei Überschreiten einer auf ihn radial nach innen wirkenden Gegenkraft in das Rad zurückfedert.

Dieses Grundprinzip wirkt auch in dem Fall, bzw. bei der Ausführungsvariante, bei welcher zwei oder mehr Spikes zu einem auf der Lauffläche angeordneten Stollen miteinander verbunden werden.

Ein Rad mit derartigen Spikes weist insbesondere bei einem Einsatz auf einem unbefestigten Untergrund verschiedene Vorteile auf.

Im Unterschied zu einer asphaltierten Straße mit annähernd immer gleichen Grundvoraussetzungen können die Untergründe in der Land- und Forstwirtschaft, im Gartenbau oder der Landschaftspflege stark differieren. Der Untergrund kann aus lockerem Erdreich bestehen, schlammige Pfützen aufweisen, ausgetrocknet und hart, uneben und steinig, mit Pflanzen wie Moos oder Gras bedeckt sein, oder eben auch vereist und/oder verschneit sein.

Diese unterschiedliche Bodenbeschaffenheit spielt umso eher keine Rolle, je geringer die Unterschiede im Vergleich zu einem Rad sind, welches zur Fortbewegung eines Fahrzeugs auf diesem Untergrund eingesetzt wird. Nicht nur, aber auch aus diesem Grund hat es sich als vorteilhaft erwiesen, die Räder von Traktoren und anderer landwirtschaftlicher Fahrzeuge immer größer zu dimensionieren.

Doch der Einsatz relativ schwerer Fahrzeuge mit relativ großen Rädern, die unterschiedlichen Bodenbeschaffenheiten nivellierend, ist längst nicht in allen Anwendungsfällen möglich oder wünschenswert.

Vorteilhaft bietet die Erfindung die Alternative, ein Rad durch veränderliche Spikes an unterschiedliche Bodenbeschaffenheiten anpassen zu können. Das erfindungsgemäße Rad weist vorteilhaft die Eigenschaft auf, dass ein Spike federnd angeordnet ist. Insbesondere im ausgefahrenen Zustand ist er gefedert und kann teilweise oder ganz in das Rad zurückgedrückt werden. Diese Eigenschaft bietet mehrere Vorteile, von denen ein erster darin besteht, dass sich die auf eine Mehrzahl von Spikes wirkenden Druckkräfte bei einem Einsatz auf einem stark unebenen Untergrund "intelligent" derart auf die Spikes verteilen, dass kein einzelner Spike übermäßig beansprucht wird. Vielmehr wird ein unebener Untergrund dadurch kompensiert, dass Erhebungen im Untergrund zu einem stärkeren Eindrücken entsprechender Spikes, nicht aber zu einem Anheben des Rades führen. Zu diesem Zweck kann die Kennlinie der mechanischen Feder vorteilhaft linear oder annähernd linear ausgeführt sein.

Weiterhin bietet diese Eigenschaft den Vorteil, dass die Länge der Spikes gegenüber derer herkömmlicher Spikes deutlich vergrößert werden kann. Während die Länge von Spikes für Räder im Straßenverkehr üblicherweise bei 1 bis 2 mm liegt, können vorliegend die ausgefahrenen Spikes eine Länge in einem Bereich von mehreren Zentimetern, vorteilhaft in einem Bereich zwischen 0,5 cm und 5 cm, besonders vorteilhaft zwischen 1 und 3 cm aufweisen. Räder mit Spikes von einer derartigen Länge erlauben auch vergleichsweise leichten Fahrzeugen, wie etwa einem Mähroboter, auf den oben genannten Untergründen eine ausreichende gute Haftreibung.

Im Hinblick auf eine mechanische Beanspruchung lang ausgefahrener, einzelner Spikes bietet das vorbeschriebene Merkmal den Vorteil, dass ein einzelner Spike, eine Überbeanspruchung verhindernd, deutlich zurückfedern und somit die Entstehung vergleichsweise hoher Biegemomente verhindern kann. Vorteilhaft weist die mechanische Feder dazu eine relativ weiche, und/oder vorteilhaft nicht progressive Kennlinie auf. Eine Ausführung der mechanischen Feder als Spiralfeder bietet beispielsweise den Vorteil, dass die Federkennlinie durch die Geometrie der Feder einfach zu gestalten ist.

In einer vorteilhaften Ausgestaltung der Erfindung ist der Spike an einem radial beweglichen Gleitschuh angeordnet, wobei die mechanische Feder in radialer Richtung zwischen einem Widerlager und dem Gleitschuh wirkt und die Ausfahrstrecke des Spikes durch eine korrelierende radiale Position des gefederten Gleitschuhs bestimmt ist. Vorteilhaft sind das Widerlager, die Feder, der Gleitschuh und der Spike auf derselben, vorzugsweise radial orientierten, Achse angeordnet. Weiterhin vorteilhaft ist die Feder derart eingerichtet ist, dass sie den Gleitschuh und das Widerlager, insbesondere ausschließlich, auseinanderdrückt.

Der Gleitschuh und/oder das Widerlager können abgesehen von einer Kopplung über die Feder frei beweglich ausgeführt sein. Da der Spike an einem beweglichen Gleitschuh angeordnet ist, der radial nach innen kein starres Gegenlager aufweist, bewegen sich Spike und Gleitschuh bei einem Andruck gegen die Federkraft in das Rad hinein. Zugleich dringt der Spike aufgrund zunehmenden Federdrucks bis zum Erreichen eines Kräftegleichgewichts tiefer in den Untergrund ein.

Eine jeweilige Ausfahrstrecke des Spikes wird somit nicht direkt eingestellt, sondern durch die Federkonstante und die jeweils aktuell wirkenden Kräfte bestimmt. Die bei einem Kontakt mit dem Untergrund tatsächlich wirksame Ausfahrstrecke hängt daher von der Federkonstante sowie der Beschaffenheit des Untergrunds ab, in welchen der Spike, u.a. abhängig von dessen Härte, variabel tief eindringt.

In einer vorteilhaften Ausgestaltung der Erfindung ist die radiale Position des im Bezug zur Feder radial außen liegenden Gleitschuhs einseitig nach außen durch eine erste Führung und/oder einen Anschlag begrenzt. Dabei kann es sich um einen festen, beispielsweise maximalen, oder einen variablen, manuell oder automatisch einstellbaren Anschlag handeln.

Eine derartige Ausgestaltung bietet den Vorteil, dass durch einen Anschlag eine Vorspannung eingestellt und somit eine Mindestandruckkraft des Spikes festgelegt werden kann. Ist die Position des Gleitschuhs durch eine auf die radiale Position des Gleitschuhs nach innen einwirkende Führung veränderbar, so wirkt sich dies zum einen auf die maximale Ausfahrstrecke des Spikes, und zum anderen, aufgrund der Vorspannung, auf die initiale Andruckkraft des Spikes aus. Eine Möglichkeit, die radiale Position des Gleitschuhs mittels einer Führung zu verändern, bietet beispielsweise die Möglichkeit, die Position des Gleitschuhs über Zeit und/oder Ort oder über den Drehwinkel zu verändern. Letzteres ist beispielsweise dergestalt möglich, dass die einzelnen Spikes abhängig vom aktuellen Drehwinkel ein- und/ausgefahren werden, um beispielsweise bei einer Lage in der oberen Radhälfte eingefahren einen kleinbauenden Radkasten, und ausgefahren in der unteren Radhälfte einen guten Bodenkontakt zu ermöglichen. Dabei ist durch eine entsprechende radiale Positionierung des Gleitschuhs stufenlos jede Ausfahrstrecke einstellbar.

Ein einseitige, nach außen begrenzte Führung bietet dabei den Vorteil, dass der Spike seine Federeigenschaften nicht verliert und weiterhin in das Rad hineinfedern kann.

In einer weiteren vorteilhaften Ausgestaltung der Erfindung ist eine radiale Position des im Bezug zur Feder radial innen liegenden Widerlagers manuell oder automatisch einstellbar, oder zumindest nach innen durch eine zweite Führung begrenzt.

Während durch eine Limitierung der äußeren Position des Gleitschuhs eine Begrenzung der Spikelänge, nicht aber eine Veränderung der maximalen Andruckkraft bewirkt werden kann, kann durch eine radial nach außen erfolgende Verschiebung des Widerlagers der Federweg verkürzt und somit die Vorspannung der Feder erhöht werden. Dies bewirkt bei unveränderter Positionierung des Gleitschuhs eine Erhöhung der initialen Andruckkraft des Spikes auf den Untergrund. Dabei kann der Andruck bei Bedarf auch derart erhöht werden, dass ein Zurückdrücken der Spikes in das Rad verhindert wird.

Alternativ kann durch paralleles Verschieben von Widerlager und Gleitschuh bei gleichbleibenden Andruckkräften die Spikelänge variiert werden. Weiterhin können durch gezielte Koordination der Positionen von Gleitschuh und Widerlager die Federeigenschaften der Spikes mit großer Flexibilität auf die Beschaffenheit eines jeweiligen Untergrunds angepasst einstellen. Vorteilhaft weist das Rad mit variabel ausfahrbaren und gefederten Spikes für die Feder zwei radial beweglichen Anschläge, vorliegend dem Widerlager und dem Gleitschuh, auf.

In einer vorteilhaften Ausgestaltung ist die in radialer Richtung wirkende mechanische Feder als Spiralfeder oder als Tellerfeder ausgeführt. Beide Bauformen weisen den Vorteil auf, dass der Federweg bei geringen seitlichen Ausmaßen bauartbedingt entlang der Längsachse bzw. der Mittelachse verläuft. Dabei ist es hinsichtlich der Tellerfeder zum Erzielen einer weichen Kennlinie möglich, eine Mehrzahl von Tellerfedern übereinander zu schichten. Aufgrund der geringen seitlichen Ausmaße eignen sich diese Bauformen besonders gut zur Anordnung auf einer radial orientierten Stange, entlang einer radial orientierten Schiene, in einem radial orientierten Zylinder oder in einer radial orientierten Hülse. Vorteilhaft können neben der mechanischen Feder auch das Widerlager und/oder der Gleitschuh auf dieser Führung angeordnet sein.

Zum Einstellen der radialen Position des Widerlagers sowie der Position des Gleitschuhs, worunter diejenige Position zu verstehen ist, welcher dieser in einer Ruhelage, d.h. ohne ein Eindrücken des Spikes, einnimmt, kann das Rad vorteilhaft derartig ausgeführt sein, dass diese Position bzw. diese Positionen durch eine einzelne, zwei jeweilige oder eine gemeinsame Stelleinrichtung veränderbar ist bzw. sind.

Diese Stellmöglichkeiten bieten ein hohes Maß an Flexibilität zur Anpassung an einen jeweiligen Untergrund. Ergänzend hat sich gezeigt, dass bestimmte Einstellungen zur Bearbeitung des Untergrunds, wie zum Beispiel dem Lüften einer Rasenfläche geeignet sind.

Die Betätigung der Stelleinrichtung kann manuell, beispielsweise über eine Stellschraube oder eine Zwinge, oder auch automatisch, beispielsweise über eine ferngesteuerte elektrisch betriebene Spindel oder einen Schrittmotor erfolgen.

In einer vorteilhaften Ausgestaltung des Rades mit variablen Spikes ist die radiale Position von Gleitschuh und/oder Widerlager von einer einzelnen, gemeinsamen oder jeweiligen Stelleinrichtung während einer Drehung des Rades veränderbar. Dazu kann die Stelleinrichtung zumindest eine Komponente aufweisen, welche außerhalb des Rades anordenbar ist

Vorteilhaft können die Feder, das Widerlager, der Gleitschuh und/oder der Spike in einer radial orientierten Hülse angeordnet sein, welche zumindest abschnittsweise einen Längsschlitz aufweist, über welchen die radiale Position von Widerlager und/oder Gleitschuh innerhalb der Hülse einstellbar ist.

In der Hülse können Widerlager und/oder Gleitschuh beweglich, insbesondere gleitend, gelagert sein und jeweils - als bewegliche Komponente der Stelleinrichtung - einen durch den Schlitz aus der Hülse herausgeführten Hebel in Form eines Widerlagerhebels beziehungsweise Gleitschuhhebels aufweisen.

Vorteilhaft kann außerhalb des Rades, d.h. beispielsweise am Fahrzeug, eine zweite, gegenüber dem Rad fixierte Komponente der Stelleinrichtung angeordnet sein. Diese kann einen einzigen Stellmechanismus aufweisen, um beispielsweise entweder nur die Position des Gleitschuhs oder nur die Position des Widerlagers zu führen. Oder sie kann zwei Stellmechanismen aufweisen, um sowohl die Position des Gleitschuhs, als auch die Position des Widerlagers zu führen. Es ist somit eine Frage der individuellen Ausgestaltung, ob eine entsprechende Anordnung aus Rad und Stelleinrichtung bzw. Stelleinrichtungen zwei Stelleinrichtungen mit je einem Stellmechanismus, eine Stelleinrichtung mit zwei Stellmechanismen, oder, z.B. im Ausführungsfall eines Rades mit nicht verstellbarem Widerlager, nur eine Stelleinrichtung mit nur einem Stellmechanismus aufweist.

In einer vorteilhaften Ausgestaltung der Anordnung umfasst die zweite Komponente der Stelleinrichtung einen ersten Stellmechanismus mit einer - vorzugsweise ringförmig geschlossenen - ersten Führung, insbesondere einen ersten Steuerring, welche derart parallel zu einer Rotationsebene des Rades anordenbar ist, dass sie eine - vorzugsweise ständige - einseitige und radial nach außen begrenzende Führung des Gleitschuhs ausbildet.

Gegenüber einer abschnittsweisen, beispielsweise nur über bestimmte Winkelbereiche aktive Führung, weist eine ständige, über eine komplette Umdrehung des Rades aktive Führung den Vorteil auf, weniger anfällig für Störungen zu sein. Eine ständige Verbindung zwischen der Führung und einem Hebel verringert beispielsweise die Gefahr, dass sich Führung und Hebel gegeneinander verstellen oder verhaken, zum Beispiel aufgrund von zwischenzeitlich eingedrungenem Schmutz.

Dabei kann eine derartige Führung beispielsweise als ein Leitblech ausgeführt sein, welches eine ständige, einseitige und radial nach außen begrenzende Führung des Gleitschuhhebels ausbildet. Ein derartiges Leitblech kann vorteilhaft derart dünn und flexibel ausgeführt sein, dass es beispielsweise mittels Stellmotoren oder manuell verstellbaren, radial angeordneten Spindeln in seiner Außenform derart umformbar ist, dass ein an dem Leitblech entlang geführter Hebel eines Gleitschuhs während einer Drehung des Rades dem Radius des Leitblechs folgend die radiale Position des Gleitschuhs in einer gewünschten Weise ändert.

Diese, hier für ein erstes Leitblech zur Ausgestaltung einer ersten Führung für eine Einstellung der Position des Gleitschuhs beschriebene Lösung ist in gleicher Weise für die Ausgestaltung einer zweiten Führung für eine Einstellung der Position des Widerlagers geeignet.

In einer vorteilhaften Ausgestaltung der Anordnung kann die zweite Komponente der Stelleinrichtung einen zweiten Stellmechanismus mit einer - vorzugsweise ringförmig geschlossenen - zweiten Führung, insbesondere einen zweiten Steuerring, aufweisen, welche derart parallel zu einer Rotationsebene des Rades anordenbar ist, dass sie eine - vorzugsweise ständige - einseitige und radial nach innen begrenzende Führung des Widerlagers ausbildet.

Vorteilhaft kann dabei die zweite Führung als zweites Leitblech ausgeführt sein, welches eine ständige, einseitige und radial nach außen begrenzende Führung des Widerlagerhebels ausbildet.

Weiterhin vorteilhaft kann, wie zuvor für die Führung eines Gleitschuhhebels beschrieben, die Ringform eines an einem Fahrzeug anordenbaren ersten und/oder zweiten Steuerrings, insbesondere eines ersten und/oder zweiten Leitblechs, derart veränderlich ausgeführt sein, dass ein radialer Abstand einer jeweiligen Leitfläche des ersten und/oder zweiten Steuerrings, insbesondere eines ersten und/oder zweiten Leitblechs, zu einer Drehachse des Rades entlang des Umfangs des Steuerrings beziehungsweise entlang dem Drehwinkel des Rades einstellbar ist.

Wie beschrieben kann das Rad derart ausgeführt und eingerichtet sein, dass die Spikes in Abhängigkeit von einer Phase bzw. einem Drehwinkel des Rades variabel weit ausfahrbar sind. Es ist zudem derart ausführbar, dass die radiale Position von dem an dem Gleitschuh angeordneten Spike und/oder die radiale Position von dem zugehörigen Widerlager für jeden einzelnen Spike unabhängig von benachbarten Spikes individuell einstellbar ist. Diese individuelle Einstellbarkeit ist unabhängig von einer Drehbewegung des Rades gegeben, eine Einstellung kann zum Beispiel auch im Stillstand erfolgen.

Weiterhin kann ein Steuerring unterbrochen ausgeführt sein, und beispielsweise nur Einfluss auf Gleitschuhe und/oder Widerlager ausüben, welche sich gerade in einem vorbestimmten Sektor, beispielsweise auf einer Oberseite des Rades befinden.

Es kann insbesondere sinnvoll sein, Gleitschuhe nebst Spikes, welche sich auf der Oberseite des Rades befinden, einzuziehen, um die Spikes von aufgespießten Blättern zu befreien und/oder die Lauffläche für eine Säuberung freizulegen.

Ebenso kann es beispielsweise sinnvoll sein, Widerlager, welche sich auf der Unterseite des Rades befinden, herauszufahren, um ein möglichst weites Herausfahren, auch bei Gegendruck zu erwirken, um beispielsweise auf verdichtetem Schnee ein Eindrücken der Spikes in den Untergrund zu bewirken. Dazu können die Steuerringe aus mehreren Abschnitten bestehen oder aus mehreren Leitblechen ausgeführt sein. Vorteilhaft können die Leitbleche die Position von Gleitschuh bzw. Widerlager gegen den Druck der Feder einseitig begrenzen. Die geschieht vorteilhaft nach innen, im Bezug auf das Widerlager, und nach außen, im Bezug auf den Gleitschuh. Grundsätzlich sind auch Leitbleche vorstellbar, die, zwecks Unterstützung der Federkraft, in die jeweils andere Richtung wirken.

Ein Leitblech kann an einer Antriebseinheit bzw. dem Fahrzeug befestigt sein. Vorteilhaft kann ein Leitblech von der Position her verstellbar sein.

Eine Verstellung des Leitblechs kann vorteilhaft durch ein oder mehrere Verstelleinheiten, beispielsweise Spindelmotoren erfolgen. Ein Leitblech kann gebogen oder kreisförmig ausgeführt bzw. angeordnet sein und mehrere verstellbare Befestigungspunkte aufweisen.

Ein Vorteil derartiger verstellbarer Leitbleche ist, dass sie die Eigenschaften der Spikes nicht an dem gesamten Rad zugleich verändern, sondern punktuell und auf etwaige Erfordernisse angepasst. So werden bei einem Andruck der Unterseite des Rades auf den Untergrund andere Spike-Eigenschaften benötigt als zum Beispiel auf der Oberseite des Rades.

In einer besonderen Ausgestaltung ist ein Leitblech als Federblech ausgeführt. Dieses weist den Vorteil auf, dass es sich unter Belastung, beispielsweise während eines Eindrückens von Spikes entgegen der Federkraft, federnd verformt. Dabei kann die Federwirkung durch beispielsweise die Materialstärke des Federblechs und/oder die Anzahl der Befestigungs- bzw. Verstellpunkte für das Federblech gestaltet werden.

Durch den Einsatz von Federblechen bei einer geringen Anzahl von Befestigungspunkten kann an einer Stelle einer Radauflage eine Federwirkung durch punktuelles Nachgeben an der Radauflage erzeugt werden.

In einer besonderen Ausgestaltung der Erfindung wird die Federkraft, welche den Spike nach außen drückt, nicht durch eine zwischen Widerlager und Gleitschuh angeordnete Spiralfeder, sondern durch auf Widerlager und/oder Gleitschuh einwirkende Federbleche erbracht. Auf eine zwischen Widerlager und Gleitschuh angeordnete Spiralfeder kann in diesem Fall verzichtet werden. Dadurch reduziert sich ein Kraftaufwand zum Drehen des Rades erheblich, da nicht gegen eine Wirkung der Feder gearbeitet werden muss.

Der Gleitschuh der Spikes kann beispielsweise durch eine doppelte, bzw. zweiseitige Führung mittels eines inneren und eines äußeren Steuerrings aus Federblech gesteuert und aufgrund der Federwirkung der Steuerringe zugleich gefedert werden.

Eine derartige Ausgestaltung weist den Vorteil auf, dass die Ausfahrstrecke der Spikes während der Radumdrehung geführt und die Spikes ohne Gegendruck von Spiralfedern in das Radinnere geführt werden können.

Ein Einfahren der Spikes über einen gewissen Sektor des Rades ist vorteilhaft, um, wie beschrieben, die Spikes von aufgespießten Blättern und die Lauffläche von beispielsweise anhaftendem Laub, Rasenschnitt oder Schneematsch zu befreien.

Um generell auftretende Reibungskräfte zu minimieren, kann der Gleitschuh, welcher eine Funktion einer Halterung für den Spike aufweist, und/oder das Widerlager vorteilhaft kugelgelagert ausgeführt sein. Zudem kann an einem Gleitschuhhebel zur Bewegung des Gleitschuhs und/oder einem Widerlagerhebel zur Bewegung des Widerlagers eine Gleit- oder Rollvorrichtung angeordnet sein.

In einer vorteilhaften Ausgestaltung der Anordnung aus Rad und Stelleinrichtung weist die Anordnung zudem Abstreifbleche auf, die ausgeführt und eingerichtet sind, Anhaftungen von der Lauffläche des Rades abzustreifen.

Die Abstreifbleche können als feste Abstreifer oder flexible Abstreifer wie Bürsten oder Federn oder einer Kombination daraus ausgeführt sein. Dabei kann eine Streifkante eines Abstreifblechs über die gesamte Breite des Blechs durchgängig ausgeführt sein, oder im Bereich der einziehbaren Spikes einen Ausschnitt aufweisen. Letzteres ist insbesondere dann sinnvoll, wenn die Spikes nicht vollständig, sondern nur anteilig eingezogen werden. In diesem Fall kann ein beispielsweise V-förmiger oder U-förmiger Ausschnitt ein Durchlasstor für die Spikes ausformen.

Werden die Spikes ggf. nach Passage eines Abstreifblechs, aus dem Radinneren herausgefahren, weist dies den zusätzlichen Vorteil auf, dass verbliebene Anhaftungen durch die herausfahrenden Spikes abgestoßen werden können. Werden die Spikes aufgrund eines sehr harten Untergrunds in das Radinnere hineingedrückt, schont dies nicht nur den Untergrund, sondern auch das zu bewegende Fahrzeug, welches trotz aggressiver Spikes einen ruhigen Lauf aufweisen kann. Dieser Vorteil ist insbesondere bei Fahrzeugen mit langsam drehenden Rädern, insbesondere bei Roboterfahrzeugen von Vorteil. Für diese vorteilhaft vermeiden einfahrbare Spikes unnötige Erschütterungen.

Die Erfindung betrifft zudem ein Roboterfahrzeug, welches zumindest ein Rad mit den vorbeschriebenen Merkmalen, oder einer der vorbeschriebenen Anordnungen mit einem derartigen Rad aufweist, wobei das Roboterfahrzeug zudem eine Steuereinrichtung aufweisen kann, die eingerichtet ist, eine Ausfahrstrecke eines Spikes autonom zu steuern.

Aufgrund seiner im Vergleich zu landwirtschaftlichen Zugmaschinen zumeist geringeren Dimensionen hinsichtlich Größe und Gewicht stellt sich gerade für kleine bis mittlere Roboterfahrzeuge das Problem, auf unebenem, unbefestigtem, inhomogenem oder glattem Untergrund nicht genügend Haftreibung aufzubringen.

Von einem Roboterfahrzeug mit dem vorbeschriebenen Rad oder der vorbeschriebenen Anordnung dagegen kann vorteilhaft die Haftreibung seiner Räder durch ein situationsangepasstes Ausfahren der Spikes bedarfsgerecht verbessert werden. Dabei kann das Roboterfahrzeug vorteilhaft eine Steuerung sowie Sensoren aufweisen, wobei die Sensoren vorteilhaft einen Schlupf eines Rades erkennen können, und wobei die Steuerung vorteilhaft eingerichtet ist, autonom über ein Ausfahren der Spikes zu entscheiden, um beispielsweise ein Liegenbleiben des Roboterfahrzeugs zu verhindern.

In einer vorteilhaften Ausgestaltung kann das Roboterfahrzeug als Mähroboter ausgeführt sein und Mittel zur Positionsermittlung aufweisen, die den Einsatz und die Ausfahrstrecke der Spikes in Abhängigkeit von einer jeweils ermittelten Aufenthaltsposition begrenzen. Vorteilhaft kann eine derartige Begrenzung von jeweiligen, zu einem Aufenthaltsort vorgebbaren Bedingungen erfolgen.

Die Erfindung betrifft weiterhin einen Mähroboter, wobei der Mähroboter eingerichtet ist, seine Position zu ermitteln, einer Datenbank der Position zugehörige Ortsinformation zu entnehmen, und die Ausfahrstrecke der Spikes in Abhängigkeit von der Ortsinformation zu begrenzen. Dabei kann die Datenbank, die sowohl an Bord befindlich oder auch über eine Funkverbindung erreichbar sein, und beispielsweise Kartenmaterial aufweisen, welches über die Beschaffenheit des Untergrunds in der Umgebung Aufschluss gibt. Darüber hinaus kann sie beispielsweise Informationen dazu enthalten, inwieweit an einer jeweiligen Position der Einsatz von Spikes aufgrund eines empfindlichen Untergrunds, beispielsweise aufgrund von empfindlichen Steinplatten einer Terrasse oder dem empfindlichen Green eines Golfplatzes, unzulässig ist.

### Zeichnungen

Nachfolgend wird die Erfindung unter Bezugnahme auf die anliegenden, schematischen Zeichnungen anhand bevorzugter Ausführungsformen näher erläutert.

Es zeigen
- Fig. 1: eine Skizze eines Ausführungsbeispiels eines Rades mit variablen, radial ausfahrbaren Spikes sowie seiner Steuerringe aus axialer Perspektive;
- Fig. 2: drei Skizzen eines Ausführungsbeispiels zum Aufbau einer in einer Hülse gleitend gelagerten Anordnung von Spike, Gleitschuh, Feder und Widerlager;
- Fig. 3: eine Skizze eines Ausführungsbeispiels eines Rades mit variablen, radial ausfahrbaren Spikes sowie einer Stelleinrichtung zum Einstellen der Ausfahrstrecke eines Spikes aus seitlicher Perspektive;
- Fig. 4: eine Skizze eines Ausführungsbeispiels eines Rades, dessen Gleitschuh und Widerlager von außen verstellbar sind in perspektivischer Darstellung;
- Fig. 5: ein Kreissegment des Ausführungsbeispiels des in Fig. 4 beschriebenen Rades, geschnitten entlang einer radialen Achse;
- Fig. 6: eine Skizze eines alternativen Ausführungsbeispiels eines Rades mit variablen, radial ausfahrbaren Spikes sowie seiner Steuerringe bzw. Leitbleche aus axialer Perspektive.

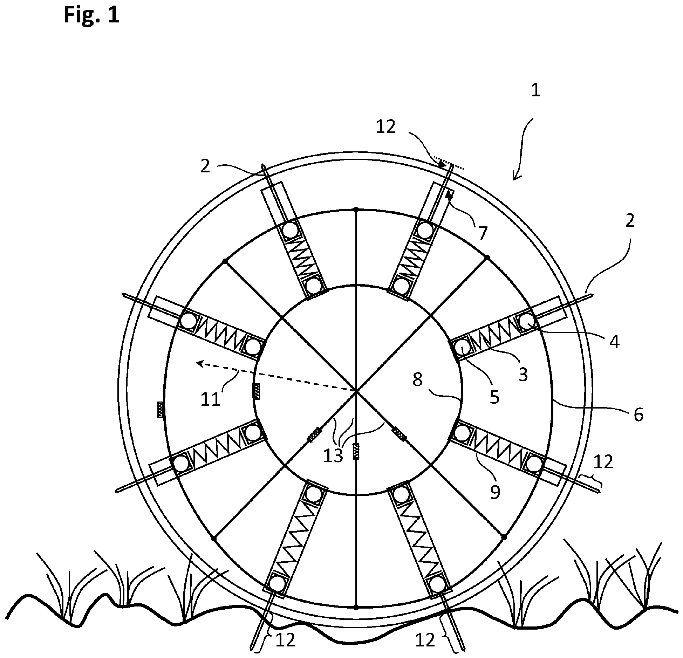

Fig. 1 zeigt eine seitliche Darstellung eines Ausführungsbeispiels eines Rades 1 mit variablen, radial ausfahrbaren Spikes 2 sowie seiner Steuerringe in Form von Leitblechen 6, 8 aus axialer, seitlicher Perspektive.

Aus Fig.1 ersichtlich ist ein Rad 1, insbesondere Fahrzeugrad, mit radial angeordneten, radial ausfahrbaren Spikes 2, wobei eine Ausfahrstrecke 12 eines Spikes 2 einstellbar während einer Rotation des Rades 1 veränderlich ist. Der Spike 2 wird von einer Federkraft einer mechanischen Feder 3 nach außen gedrückt, so dass ein aus einer Lauffläche des Rades 1 ausgefahrener Spike 2 bei Überschreiten einer auf ihn radial nach innen wirkenden Gegenkraft in das Rad 1 zurückfedert.

Der Spike 2 ist an einem radial beweglichen Gleitschuh 4 angeordnet und die mechanische Feder 3 wirkt in radialer Richtung 11 zwischen einem Widerlager 5 und dem Gleitschuh 4. Dabei wird die Ausfahrstrecke 12 des Spikes 2 durch eine korrelierende radiale Position des Gleitschuhs 4 bestimmt.

Aus Fig. 1 ersichtlich wird die radiale Position des im Bezug zur Feder 3 radial außen liegenden Gleitschuhs 4 einseitig nach außen durch eine erste Führung 6 begrenzt. Ohne diese Führung 6 würde die Position des Gleitschuhs 4 durch den Anschlag 7, hier gleichbedeutend mit einem Boden der Hülse 9 begrenzt. Hier nicht dargestellt, könnte ein Anschlag 7 aus radialer Sicht 11 auch vor dem Boden der Hülse 9 angeordnet werden.

Eine radiale Position des im Bezug zur Feder 3 radial innen liegenden Widerlagers 5 kann manuell oder automatisch einstellbar ausgeführt sein. Vorliegend ist die Position nach innen durch eine zweite Führung 8 begrenzt.

Weiterhin aus Fig. 1 ersichtlich sind die radialen Positionen von Gleitschuh 4 und Widerlager 5 von jeweiligen Leitblechen 6, 8 einer Stelleinrichtung 13 während einer Drehung des Rades 1 veränderbar. Dabei stellen die Leitbleche 6, 8 eine Komponente der Stelleinrichtung 13 dar, welche außerhalb des Rades 1 angeordnet ist.

Ein Durchmesser des Rades 1 ohne aus einer Lauffläche herausragende Spikes 2 kann als Nenndurchmesser bezeichnet werden. Dadurch, dass das sich die Spikes 2 an einen Untergrund anpassen und in diesen abhängig von dessen Härte eindringen, oder bedingt durch eine auf das Rad 1 wirkende Achslast in das Rad 1 zurückfedern, ändert sich der Durchmesser des Rades 1 im Bezug zu einer Auflagefläche aufgrund der Spikes 2 nicht, sie entspricht dem Nenndurchmesser.

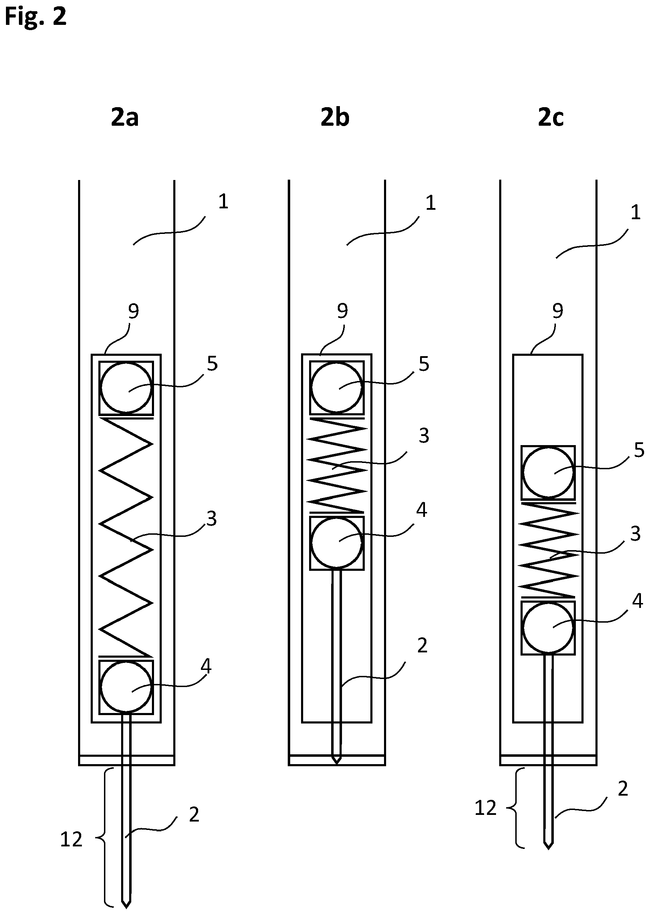

Fig. 2 zeigt drei Skizzen eines Ausführungsbeispiels zum Aufbau einer in einer Hülse 9 gleitend gelagerten Anordnung von Spike 2, Feder 3, Gleitschuh 4 und Widerlager 5.

Gleitschuh 4 ist axial beweglich ausgeführt und weist radial nach außen gerichtet einen Spike 2 auf. Der Gleitschuh 4 wird von der Feder 3, hier als Spiralfeder ausgeführt, nach außen gedrückt. Der Gleitschuh 4 ist nicht fixiert, sondern beweglich ausgeführt, so dass der Spike 2 federnd gelagert ist. Der Spike 2 ist entgegen einer nach außen wirkenden Druckkraft der Feder 3 radial nach innen eindrückbar. Die Feder 3 wirkt ausschließlich als Druckfeder. Sie drückt den Gleitschuh 4 und das Widerlager 5 auseinander. Der Weg von Gleitschuh 4 und/oder Widerlager 5 wird jeweils durch einen Anschlag 7 oder 9 begrenzt.

Fig. 2a zeigt eine Skizze, bei welcher weder der Gleitschuh 4, noch das Widerlager 5 durch eine jeweilige Führung 6, 8 geführt werden. Die unter einem Vordruck stehende Feder 3 ist als Spiralfeder ausgeführt und kann sich ungehindert ausdehnen. Sie drückt Gleitschuh 4 und Widerlager 5 in ihre jeweiligen Endpositionen. Der Spike 2 wird dadurch maximal ausgefahren. Aufgrund der jedoch bereits relativ stark entspannten Feder 3 bedarf es nur einer relativ geringen Gegenkraft, um den Spike 2 mitsamt dem Gleitschuh 4 in die Hülse 9 zurückzudrücken.

Fig. 2b zeigt eine Skizze, bei welcher der Gleitschuh 4 von einer hier nicht dargestellten Führung 6 radial nach innen geführt ist. Die Feder 3 wird dadurch komprimiert und über eine bereits bestehende Vorspannung hinaus zusätzlich gespannt. Durch die Führung des Gleitschuhs 4 nach innen wird der Spike 2 vollständig eingefahren.

Fig. 2c zeigt eine Skizze, bei welcher der Gleitschuh 4 von einer hier nicht dargestellten Führung 6 eine kurze Strecke radial nach innen geführt ist. Ausgehend von der Position des Gleitschuhs 4 in Fig. 2b ist die Position des Gleitschuhs ein Stück, einer Ausfahrstrecke 12 des Spikes entsprechend, nach außen gefahren. Zugleich ist die Position des Widerlagers 5 gegenüber Fig. 2b ebenfalls radial nach außen verlegt worden, so dass die Feder 3 eine deutliche Spannung aufweist und der Spike 3 nur durch eine vergleichsweise hohe Gegenkraft in die Hülse 9 zurückgedrückt werden kann. Anders formuliert ist der Andruck des Spikes 3 auf einen Untergrund relativ hoch. Durch die Positionierung des Widerlagers 5 kann die Andruckkraft, und durch die Positionierung des Gleitschuhs 4 kann die Spikelänge bzw. Ausfahrstrecke 12 des Spikes 2 eingestellt werden.

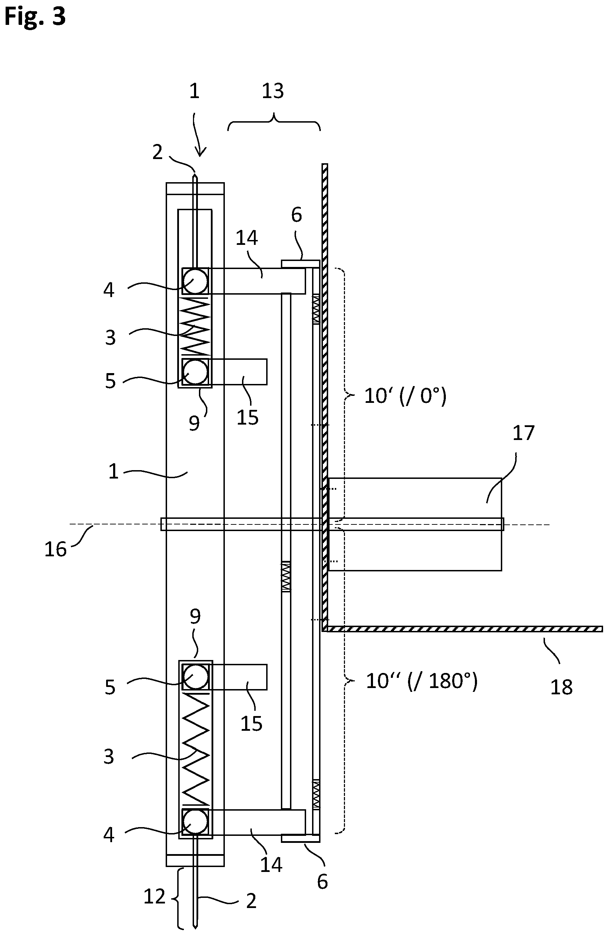

Fig. 3 zeigt eine Skizze eines Ausführungsbeispiels eines Rades 1 mit variablen, radial ausfahrbaren Spikes 2 sowie einer Stelleinrichtung 13 zum Einstellen der Ausfahrstrecke 12 eines Spikes 2 aus seitlicher Perspektive quer zur Achse des Rades 1.

Zu Gunsten einer besseren Übersichtlichkeit ist in Fig. 3 nur der Stellmechanismus zum Einstellen der radialen Position des Gleitschuhs 4, bei diesem Ausführungsbeispiel identisch zur Ausfahrstrecke 12 des Spikes 2, dargestellt.

Aus Fig. 3 ersichtlich sind Feder 3, Widerlager 5, Gleitschuh 4 und Spike 2 in einer radial orientierten Hülse 9 angeordnet, welche zumindest abschnittsweise auf der Radinnenseite einen aus dieser Perspektive nicht sichtbaren Längsschlitz aufweist, über welchen die radialen Positionen von Widerlager 5 und Gleitschuh 4 innerhalb der Hülse 9 einstellbar sind. Widerlager 5 und Gleitschuh 4 sind in der Hülse 9 beweglich gleitend angeordnet und weisen jeweils einen durch den Schlitz aus der Hülse 9 herausgeführten Hebel 14, 15 in Form eines Widerlagerhebels 15 sowie eines Gleitschuhhebels 14 auf, welche beide seitlich aus dem Rad 1 herausragen.

Nur für den Stellmechanismus des Gleitschuhs 4 gezeigt, wird die Position des von der Feder 3 nach außen gedrückten Gleitschuhs 4 von dem Leitblech 6 als Führung begrenzt. Das Leitblech 6 ist parallel zu einer Rotationsebene des Rades 1 angeordnet und stellt während des gesamten Umlaufs des Rades 1 mittels des Gleitschuhhebels 14 eine einseitige und radial nach außen begrenzende Führung 6 für den Gleitschuh 4 dar.

Nicht dargestellt, aber kaskadierend anordenbar, kann ein zweites Leitblech 8, welches ebenfalls parallel zu einer Rotationsebene des Rades 1 anordenbar ist, eine einseitige und radial nach innen begrenzende Führung 8 des Widerlagers 5 ausbilden.

Die Ringform des an einem Fahrzeug anordenbaren ersten Steuerrings, d.h. des ersten Leitblechs 6, ist derart veränderlich ausgeführt ist, dass ein radialer Abstand 10, 10`, 10" einer Leitfläche des ersten Steuerrings, d.h. des ersten Leitblechs 6, zu einer Drehachse 16 des Rades 1 entlang des Umfangs des Steuerrings, oder anders formuliert über den Drehwinkel des Rades 1, einstellbar ist.

Das Leitblech 6 der Stelleinrichtung 13 ist bei diesem Ausführungsbeispiel im Bereich einer Motor-Getriebe-Einheit 17 mit einer Gehäusewandung 18 eines Fahrzeugs verbunden.

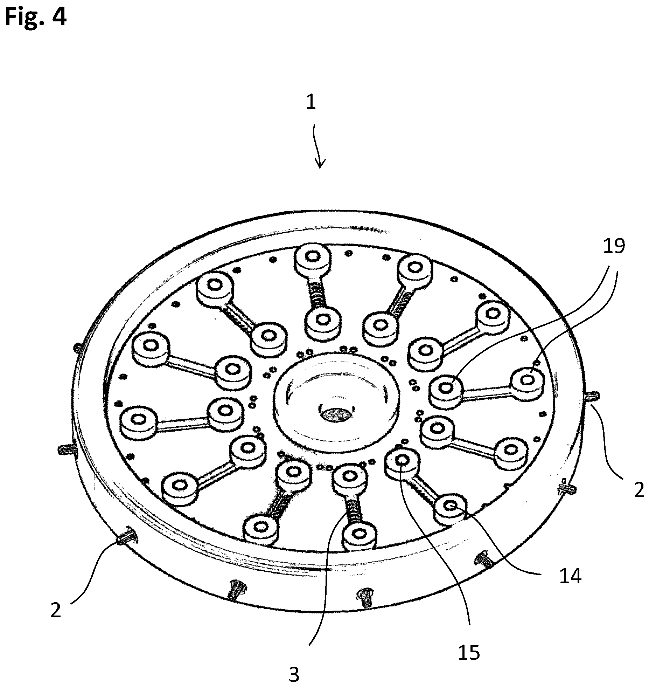

Fig. 4 zeigt eine Skizze eines Ausführungsbeispiels eines Rades 1, dessen Gleitschuhen 4 und Widerlager 5 von außen verstellbar sind. in perspektivischer Darstellung. An den im Rad 1 angeordneten Gleitschuhen 4 sind Gleitschuhhebel 14 sowie an den Widerlagern 5 Widerlagerhebel 15 angeordnet. An diesen wiederum sind Rollvorrichtungen 19 angeordnet, welche bei einem montierten Rad 1 zur radialen Verstellung von hier nicht gezeigten Leitblechen 6, 8 geführt werden. Um die im Rad 1 angeordneten Gleitschuhe 4 und Widerlager 5 steuern zu können, weist das Rad 1 radiale Längsschlitze auf.

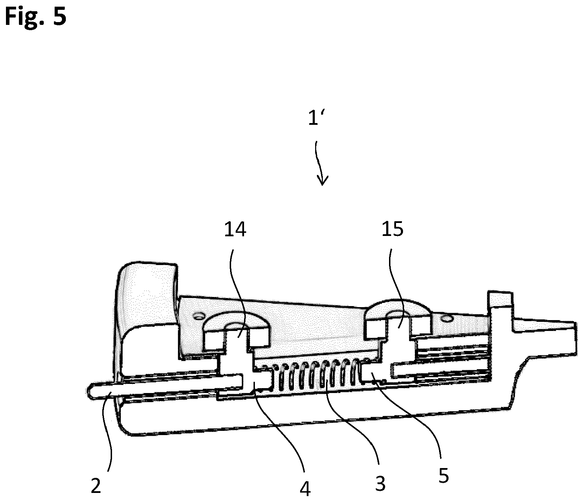

Fig. 5 zeigt ein Kreissegment 1' des Ausführungsbeispiels des in Fig. 4 dargestellten Rades 1, wobei dieses entlang einer radialen Achse, welche die Mittelachse des Spikes 2, der Spiralfeder 3 sowie einer der Führung des Gleitschuhs 4 und des Widerlagers 5 dienenden Hülse 9 ist. Dabei ist die Hülse 9 nicht als separates Bauteil, sondern als ein Hohlraum innerhalb des Rades 1 ausgeführt. In der Darstellung der Fig. 5 deutlich sichtbar, erfolgt eine Kraftübertragung auf den Spike von dem Widerlager 15 über die Feder 3 auf den Gleitschuh 4. An diesem wiederum ist der Spike 2 angeordnet, welcher durch eine Lauffläche des Rades 1 nach außen gedrückt werden kann.

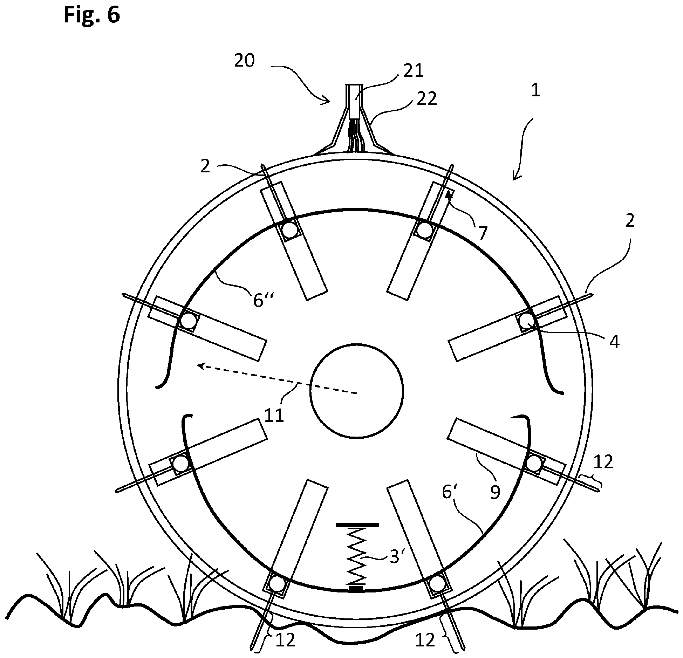

Bei einem alternativen Ausführungsbeispiels eines Rades 1 mit variablen, radial ausfahrbaren Spikes 2 können die Spikes 2 auch über eine außerhalb des Rades 1 angeordnete Feder 3` nach außen gedrückt werden. Ein derartiges Ausführungsbeispiels ist aus Fig. 6 ersichtlich.

Fig. 6 zeigt ein Ausführungsbeispiels eines Rades 1 mit variablen, radial ausfahrbaren Spikes 2, bei welchem die Spikes 2 über ein gefedert angeordnetes Leitblech 6' nach außen gedrückt werden. In einem unteren Halbkreis werden die Spikes 2 von einem gefedert ausgeführten Leitblech 6' nach außengedrückt. In einem oberen Halbkreis können sie von einem Leitblech 6", beispielsweise zu Reinigungszwecken, nach innen gedrückt werden.

Unabhängig von dem Ausführungsbeispiel der Figur 6 kann auf der Lauffläche eines Rades 1 eine Abstreifvorrichtung 20 angeordnet sein, welche beispielsweise eine Bürste 21 und/oder ein oder zwei Abstreifbleche 22 aufweisen kann.

Sofern die Spikes 2 für ein Passieren der Abstreifvorrichtung 20 vollständig einziehbar sind, kann das Abstreifblech 22 eine durchgehende Abstreifkante aufweisen. Alternativ kann die Abstreifkante zur Passage der Spikes 2 einen Schlitz oder beispielsweise einen V-förmigen oder U-förmigen Ausschnitt aufweisen.

## Patentansprüche

1. Rad (1) mit radial angeordneten, radial ausfahrbaren Spikes (2), wobei eine Ausfahrstrecke (12) eines Spikes (2) einstellbar während einer Rotation des Rades (1) veränderlich ist,
**dadurch gekennzeichnet,**
**dass** der Spike (2) von einer Federkraft einer mechanischen Feder (3) nach außen gedrückt wird, so dass ein aus einer Lauffläche des Rades (1) ausgefahrener Spike (2) bei Überschreiten einer auf ihn radial nach innen wirkenden Gegenkraft in das Rad (1) zurückfedert.

2. Rad (1) nach Anspruch 1, **dadurch gekennzeichnet, dass** der Spike (2) an einem radial beweglichen Gleitschuh (4) angeordnet ist, die mechanische Feder (3) in radialer Richtung (11) zwischen einem Widerlager (5) und dem Gleitschuh (4) wirkt und die Ausfahrstrecke (12) des Spikes (2) durch eine korrelierende radiale Position des Gleitschuhs (4) bestimmt ist.

3. Rad (1) nach Anspruch 2, **dadurch gekennzeichnet, dass** Widerlager (5), Feder (3), Gleitschuh (4) und Spike (3) auf derselben, vorzugsweise radial orientierten, Achse angeordnet sind.

4. Rad (1) nach einem der vorherigen Ansprüche, **dadurch gekennzeichnet, dass** das Rad (1) derart ausgeführt und eingerichtet ist, dass die Spikes (2) in Abhängigkeit von einer Phase bzw. einem Drehwinkel des Rades (1) stufenlos variabel weit ausfahrbar sind.

5. Rad (1) nach einem der Ansprüche 2 bis 4, **dadurch gekennzeichnet, dass** die radiale Position des im Bezug zur Feder (3) radial außen liegenden Gleitschuhs (4) einseitig nach außen durch eine erste Führung (6) und/oder einen Anschlag (7) begrenzt ist.

6. Rad (1) nach einem der Ansprüche 2 bis 5, **dadurch gekennzeichnet, dass** eine radiale Position des im Bezug zur Feder (3) radial innen liegenden Widerlagers (5) manuell oder automatisch einstellbar, oder zumindest nach innen durch eine zweite Führung (8) begrenzt ist.

7. Rad (1) nach einem der Ansprüche 2 bis 6, **dadurch gekennzeichnet, dass** das Widerlager (5) und/oder die mechanische Feder (3) und/oder der Gleitschuh (4) auf einer Stange, entlang einer radial orientierten Schiene, in einem radial orientierten Zylinder oder einer radial orientierten Hülse (9) geführt sind.

8. Rad (1) nach einem der Ansprüche 2 bis 7, **dadurch gekennzeichnet, dass** die radiale Position von Gleitschuh (4) und/oder Widerlager (5) von einer einzelnen, gemeinsamen oder jeweiligen mechanischen Stelleinrichtung (13) während einer Drehung des Rades (1) veränderbar ist, wobei die Stelleinrichtung (13) zumindest eine Komponente aufweist, welche außerhalb des Rades (1) anordenbar ist.

9. Rad (1) nach einem der Ansprüche 2 bis 8, **dadurch gekennzeichnet, dass** Feder (3), Widerlager (5), Gleitschuh (4) und/oder Spike (2) in einer radial orientierten Hülse (9) angeordnet sind, welche zumindest abschnittsweise einen Längsschlitz aufweist, über welchen die radiale Position von Widerlager (5) und/oder Gleitschuh (4) innerhalb der Hülse (9) einstellbar ist.

10. Anordnung aus einem Rad (1) nach einem der Ansprüche 5 bis 9 und einer an einem Fahrzeug anordenbaren Komponente einer Stelleinrichtung (13), **dadurch gekennzeichnet, dass** die Komponente einen ersten Stellmechanismus mit einer ersten Führung (6), insbesondere einen ersten Steuerring, umfasst, welche derart parallel zu einer Rotationsebene des Rades (1) anordenbar ist, dass sie eine einseitige und radial nach außen begrenzende Führung (6) des Gleitschuhs (4) ausbildet, wobei die erste Führung (6) als erstes Leitblech (6) ausgeführt ist.

11. Anordnung nach einem der Ansprüche 6 bis 10, **dadurch gekennzeichnet, dass** die Komponente einen zweiten Stellmechanismus mit einer zweiten Führung (8), insbesondere einen zweiten Steuerring, umfasst, welche derart parallel zu einer Rotationsebene des Rades (1) anordenbar ist, dass sie eine einseitige und radial nach innen begrenzende Führung (8) des Widerlagers (5) ausbildet, wobei die zweite Führung (8) als zweites Leitblech (8) ausgeführt ist.

12. Anordnung nach einem der Ansprüche 10 bis 12, **dadurch gekennzeichnet, dass** die Ringform eines an einem Fahrzeug anordenbaren ersten und/oder zweiten Steuerrings, insbesondere eines ersten (6) und/oder zweiten Leitblechs (8), derart veränderlich ausgeführt ist, dass ein radialer Abstand (10) einer jeweiligen Leitfläche des ersten und/oder zweiten Steuerrings, insbesondere eines ersten (6) und/oder zweiten Leitblechs (8), zu einer Drehachse des Rades (1) entlang des Umfangs des Steuerrings einstellbar ist.

13. Anordnung nach einem der Ansprüche 10 bis 13, **dadurch gekennzeichnet, dass** die Anordnung eingerichtet ist, die Spikes (2) über einen vorbestimmten Sektor des Rades (1) vollständig oder teilweise einzufahren und die Anordnung zudem eine Abstreifvorrichtung (20) aufweist, die ausgeführt und eingerichtet ist, Anhaftungen von einer Lauffläche des Rades (1) abzustreifen.

14. Roboterfahrzeug mit zumindest einem Rad (1) nach einem der Ansprüche 1 bis 9, oder einer Anordnung nach einem der Ansprüche 10 bis 13,
**dadurch gekennzeichnet,**
**dass** das Roboterfahrzeug eine Steuereinrichtung aufweist, die eingerichtet ist, eine Ausfahrstrecke (12) eines Spikes (2) autonom zu steuern.

15. Mähroboter mit zumindest einem Rad (1) nach einem der Ansprüche 1 bis 9, oder einer Anordnung nach einem der Ansprüche 10 bis 14,
**dadurch gekennzeichnet,**
**dass** der Mähroboter eingerichtet ist, seine Position zu ermitteln, einer Datenbank der Position zugehörige Ortsinformation zu entnehmen, und die Ausfahrstrecke (12) der Spikes (2) in Abhängigkeit von der Ortsinformation zu begrenzen.
